# EUROPEAN PATENT SPECIFICATION

(11) **EP 3 061 788 B1**
(45) Date of publication and mention of the grant of the patent: **19.08.2020**
(21) Application number: 14855289.6
(22) Date of filing: 20.10.2014
(51) Int. Cl.: C08L 23/02, C08F 2/44, C08K 5/524

(54) **METHOD FOR PRODUCING STABILIZED POLYMER**
VERFAHREN ZUR HERSTELLUNG EINES STABILISIERTEN POLYMERS
PROCÉDÉ DE PRODUCTION D'UN POLYMÈRE STABILISÉ

(30) Priority: 21.10.2013 JP 2013218677
(43) Date of publication of application: 31.08.2016
(73) Proprietor: Adeka Corporation, Tokyo 116-0012 (JP)
(72) Inventor: KAWAMOTO Naoshi, Saitama-shi Saitama 336-0022 (JP); SAKAI Atsushi, Saitama-shi Saitama 336-0022 (JP); SEGUCHI Tetsuya, Saitama-shi Saitama 336-0022 (JP); YAMAZAKI Kenji, Saitama-shi Saitama 336-0022 (JP)
(74) Representative: Gill Jennings & Every LLP
(86) International application number: PCT/JP2014/077850
(87) International publication number: WO 2015/060257

(56) References cited:
- EP-A1- 0 351 360
- WO-A1-2014/156572
- JP-A- 2011 052 177
- JP-A- 2011 052 178
- NERI C ET AL: "Mechanism of action of phosphites in polyolefin stabilisation", POLYMER DEGRADATION AND STABILITY, BARKING, GB, vol. 49, no. 1, 1 January 1995 (1995-01-01), pages 65-69, XP027286613, ISSN: 0141-3910 [retrieved on 1995-01-01]

## Description

### TECHNICAL FIELD

The present invention relates to a method of producing a stabilized polymer comprises the step of adding an antioxidant having a melting point of 70°C or lower at the time of polymerizing an olefin monomer and by which the resulting polymer of the olefin monomer is imparted with excellent thermal stabilization effect and the occurrence of foaming during the process of molding the polymer can be inhibited without incorporating a drying step.

### BACKGROUND ART

Polymers obtained by polymerizing a monomer having an ethylenically unsaturated bond, such as polyethylene, polypropylene and polyvinyl chloride, have poor stability against heat and light and are thus easily oxidized and degraded when exposed to a high-temperature environment or strong light; therefore, these polymers cannot attain a service life that is required for a plastic article. In order to inhibit such oxidation and degradation, a resin additive such as a phenolic antioxidant, a phosphorus-based antioxidant, a thioether-based antioxidant, a hydroxylamine compound, a hindered amine compound, an ultraviolet absorber or an acid scavenger is commonly added.

Among these stabilizers, phenolic antioxidants, phosphorus-based antioxidants and thioether-based antioxidants are known as antioxidants that are capable of imparting excellent thermal stabilization effect to polymers such as polyolefins that are obtained from a monomer(s) having an ethylenically unsaturated bond, and long-term stabilization is conventionally attained by blending such an antioxidant(s) into the subject polymer using a granulator.

However, in such a blending method using a granulator, since a polymer is subjected to thermal history during melt-kneading of the polymer and an antioxidant, deterioration of the polymer's physical properties such as a reduction in the molecular weight is unavoidable. In addition, in order to mitigate poor dispersion of the antioxidant, it is necessary to add the antioxidant in an amount that is greater than the amount required for stabilization of the polymer, which is economically disadvantageous.

In view of this, in order to omit the step of blending an antioxidant by melt-kneading with a polymer, methods in which a stabilizer is added before or during polymerization of a monomer have been studied.

For example, in Patent Document 1, it is described that phenolic antioxidants such as tetrakis(3-(3,5-di-*tert*-butyl-4-hydroxyphenyl)propionyloxymethyl)methane are known to inhibit the polymerization activities of polymerization catalysts as antioxidants of polyolefins, and a method in which a complex is formed between an ether compound and magnesium chloride carrying a Ziegler catalyst and a phenolic antioxidant is subsequently added thereto, followed by polymerization of the resultant, is proposed.

Patent Document 2 proposes a method of polymerizing an *α*-olefin in the presence of at least one antioxidant selected from organophosphites, diphosphites, phosphonates and diphosphonates.

In Patent Document 3, a method of polymerizing an olefin monomer in the presence of a phenolic antioxidant with the use of a titanium catalyst is proposed, and it is also proposed to add at least one resin additive selected from hindered amine light stabilizers, organophosphites, phosphonites and phosphorus-containing organic amides during the polymerization.

Patent Document 4 proposes a method of adding a 2,2,6,6-tetramethylpiperidine compound and a phosphorus (III) ester to the polymerization zone of an olefin polymer.

Patent Document 5 proposes a production method in which a cyclic olefin is polymerized with the use of a solvent containing a phenolic compound and/or a phosphite-based antioxidant.

In Patent Documents 6 to 8, the present inventors have proposed production methods in which an olefin monomer is polymerized with an addition of aluminum aryloxide obtained by masking an organoaluminum compound with a phenolic antioxidant.

In Patent Documents 9 to 12, it is described that monoester and diester compounds of alkylmercapto carboxylic acid of bisphenol sulfide and thiodialkyl carboxylic acid dialkyl ester compounds impart excellent stabilization effect to various synthetic resins such as polyvinyl chloride resins, polyethylene resins, polypropylene resins, polybutene resins, polybutyrene terephthalate resins, polycarbonate resins, ABS resins, nylon 6, nylon 66, ethylene-vinyl acetate copolymers, petroleum resins and coumarone resins. However, there is offered no description with regard to a method of adding these compounds at the time of polymerizing an olefin-based monomer, and what is described therein is only a method of molding a polymer by melt-kneading using an extruder.

### RELATED ART DOCUMENTS

### PATENT DOCUMENTS

Patent Document 1: Japanese Unexamined Patent Application Publication No. H5-271335 (particularly, Claims and Comparative Example 1)
Patent Document 2: Japanese Unexamined Patent Application Publication No. S63-92613
Patent Document 3: Japanese Unexamined Patent Application Publication No. H5-271335
Patent Document 4: Japanese Unexamined Patent Application Publication No. H2-53804
Patent Document 5: Japanese Unexamined Patent Application Publication No. H6-157672
Patent Document 6: Japanese Unexamined Patent Application Publication No. 2005-206625 (particularly, Claims)
Patent Document 7: Japanese Unexamined Patent Application Publication No. 2005-255953 (particularly, Claims)
Patent Document 8: Japanese Unexamined Patent Application Publication No. 2006-282985 (particularly, Claims)
Patent Document 9: Japanese Unexamined Patent Application Publication No. S51-70192
Patent Document 10: Japanese Unexamined Patent Application Publication No. S52-154851
Patent Document 11: Japanese Unexamined Patent Application Publication No. S54-083950
Patent Document 12: Japanese Unexamined Patent Application Publication No. S55-14933 8
Patent Document EP-A1-0 351 360 discloses a process for stabilising olefinic polymers during polymerisation by addition of phosphor-III esters as e.g. tris(2,4-di-tert-butyl-phenyl)-phosphit (ADK STAB 2112) exhibiting a melting point of 180-190°C.

### SUMMARY OF THE INVENTION

### PROBLEMS TO BE SOLVED BY THE INVENTION

However, in the method described in Patent Document 1, the treatment of the catalyst is complicated, and there is thus a demand for a polymer stabilization method which is more convenient and does not restrict the catalytic actions. Further, in the production methods described in Patent Documents 2 to 5, a technique of dissolving an antioxidant in a solvent such as heptane or hexane and then adding the resulting solution during polymerization of an olefin monomer is employed. Still, there are cases where the solvent used for the addition of the antioxidant remains in the resulting polymer and causes foaming during molding of the polymer. Moreover, the odor generated by the residual solvent may deteriorate the working environment. Therefore, a step of drying the polymer is required, which is economically disadvantageous. Furthermore, dust generation associated with the addition of the antioxidant may also cause deterioration of the working environment.

In the production methods described in Patent Documents 6 to 8 where an aluminum aryloxide obtained by masking a phenolic antioxidant is used, since this aluminum aryloxide is incorporated using a solvent, there are cases where the solvent remain in the resulting polymer and causes foaming during granulation using an extruder.

In view of the above, an object of the present invention is to provide a method of producing a stabilized polymer by which, while imparting sufficient stabilization effect to the resulting polymer of a monomer having an ethylenically unsaturated bond, not only the amount of a solvent remaining in the polymer can be reduced and the occurrence of foaming can be inhibited but also dust generation is suppressed.

### MEANS FOR SOLVING THE PROBLEMS

The present inventors intensively studied so as to solve the above-described problems and discovered that the problems can be solved by incorporating the step of adding a specific antioxidant having a melting point of 70°C or lower to a catalyst system or a polymerization system before or during polymerization of a monomer having an ethylenically unsaturated bond, thereby completing the present invention as defined in the claims.

That is, the method of producing a stabilized polymer according to the present invention comprises the step of adding an antioxidant having a melting point of 70°C or lower to a catalyst system or a polymerization system before or during polymerization of a monomer having an ethylenically unsaturated bond wherein 0.005 to 0.5 parts by mass of the antioxidant is incorporated with respect to 100 parts by mass of a polymer obtained by the polymerization of the monomer having an ethylenically unsaturated bond, as defined in claim 1.

In this method, the antioxidant may be in a mixture with a solvent.

In this method of producing a stabilized polymer according to the present invention, it is preferred that the monomer having an ethylenically unsaturated bond comprise an *α*-olefin.

It is also preferred that the solvent be selected from mineral oils, aliphatic solvents, aromatic solvents and mixtures thereof.

Further, in the method of producing a stabilized polymer according to the present invention, it is preferred that the polymerization be vapor-phase polymerization or bulk polymerization.

The antioxidant having a melting point of 70°C or lower contain at least one compound represented by the following Formula (1) or (2): 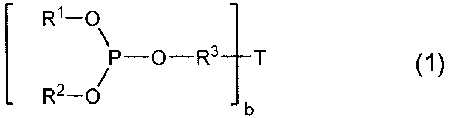
(wherein, R¹ and R² each independently represent any of an alkyl group having 1 to 40 carbon atoms, an aryl group having 6 to 40 carbon atoms, an arylalkyl group having 7 to 40 carbon atoms, a heterocycle-containing group having 3 to 25 carbon atoms and a combination thereof, which R¹ and R² are optionally bound together to form 5,5-dialkyl-1,3,2-dioxaphosphorinane;
R³ represents a direct bond, an alkylidene group having 1 to 40 carbon atoms or an arylene group having 6 to 40 carbon atoms;
b represents an integer of 1 to 4;
when b is 1, T represents a hydrogen atom, an alkyl group having 1 to 40 carbon atoms or an aryl group having 6 to 40 carbon atoms;
when b is 2, T represents an alkylidene group having 1 to 40 carbon atoms, an arylene group having 6 to 40 carbon atoms or -O-;
when b is 3, T represents an alkanetriyl group having 1 to 40 carbon atoms;
when b is 4, T represents an alkanetetrayl group having 1 to 40 carbon atoms;
a methylene group in the alkyl group, the alkylidene group, the alkanetriyl group and the alkanetetrayl group are optionally substituted with >C=O, -O-, -S-, -CO-O-, -O-CO-, -O-CO-O-, -NR⁴-, a phosphine, a phosphinite, a phosphonite, a phosphite, a phosphorane, a phosphonate or a combination thereof and also branched; and
R⁴ represents a hydrogen atom or an alkyl group having 1 to 4 carbon atoms); or 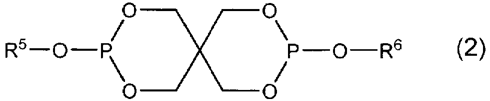 (wherein, R⁵ and R⁶ each independently represent an alkyl group having 1 to 40 carbon atoms or an aryl group having 6 to 40 carbon atoms).

It is preferred that the antioxidant used in the present invention contain a compound represented by the Formula (1) wherein R¹ and R² each represent an alkyl group having 8 to 17 carbon atoms, because the effects of the present invention are prominently exerted.

### EFFECTS OF THE INVENTION

By the method of producing a stabilized polymer according to the present invention, a polymer imparted with excellent thermal stabilization effect is obtained and the productivity is expected to be improved because a process of drying the resulting polymer is not required.

### MODE FOR CARRYING OUT THE INVENTION

The method of producing a stabilized polymer according to the present invention will now be described based on preferred embodiments.

The method of producing a stabilized polymer according to the present invention comprises the step of adding an antioxidant having a melting point of 70°C or lower to a catalyst system or a polymerization system before or during polymerization of a monomer having an ethylenically unsaturated bond such that 0.005 to 0.5 parts by mass of the antioxidant is incorporated with respect to 100 parts by mass of a polymer obtained by the polymerization of the monomer having an ethylenically unsaturated bond.

First, the antioxidant having a melting point of 70°C or lower used in the present invention will be described.

In the present invention, the "antioxidant having a melting point of 70°C or lower" refers to a compound having a melting point of 70°C or lower that is a phenolic or phosphorus-based antioxidant containing at least one compound represented by the following Formula (1) or (2): 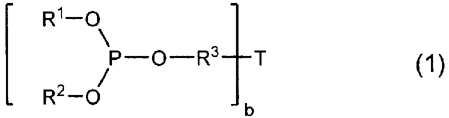
(wherein, R¹ and R² each independently represent any of an alkyl group having 1 to 40 carbon atoms, an aryl group having 6 to 40 carbon atoms, an arylalkyl group having 7 to 40 carbon atoms, a heterocycle-containing group having 3 to 25 carbon atoms and a combination thereof, which R¹ and R² are optionally bound together to form 5,5-dialkyl-1,3,2-dioxaphosphorinane;
R³ represents a direct bond, an alkylidene group having 1 to 40 carbon atoms or an arylene group having 6 to 40 carbon atoms;
b represents an integer of 1 to 4;
when b is 1, T represents a hydrogen atom, an alkyl group having 1 to 40 carbon atoms or an aryl group having 6 to 40 carbon atoms;
when b is 2, T represents an alkylidene group having 1 to 40 carbon atoms, an arylene group having 6 to 40 carbon atoms or -O-;
when b is 3, T represents an alkanetriyl group having 1 to 40 carbon atoms;
when b is 4, T represents an alkanetetrayl group having 1 to 40 carbon atoms); or 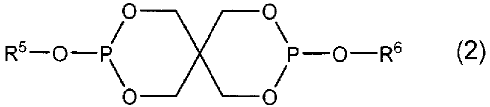 (wherein, R⁵ and R⁶ each independently represent an alkyl group having 1 to 40 carbon atoms or an aryl group having 6 to 40 carbon atoms).

Examples of the alkyl group having 1 to 40 carbon atoms that may be represented by R¹, R² and T in the Formula (1) include methyl, ethyl, propyl, iso-propyl, cyclopropyl, butyl, *sec*-butyl, *tert*-butyl, *iso*-butyl, pentyl, *iso*-pentyl, *tert*-pentyl, cyclopentyl, 4-ethyl-2-methylheptyl, hexyl, 2-methylhexyl, 3-methylhexyl, cyclohexyl, 4-methylcyclohexyl, 2,4-dimethylhexyl, cyclohexyl, 1,2,4-trimethylcyclohexyl, heptyl, 2-heptyl, 3-heptyl, *iso*-heptyl, *tert*-heptyl, 1-octyl, *iso*-octyl, *tert*-octyl, nonyl, isononyl, decyl, undecyl, dodecyl, tridecyl, isotridecyl, tetradecyl, pentadecyl, hexadecyl, heptadecyl, octadecyl, eicosyl, adamantyl and norbornyl.

Examples of the aryl group having 6 to 40 carbon atoms that may be represented by R¹, R² and T in the Formula (1) include phenyl, naphthyl, anthracenyl, phenanthryl, fluorenyl, indenyl, 2-methylphenyl, 3-methylphenyl, 4-methylphenyl, 4-vinylphenyl, 3-*iso*-propylphenyl, 4-*iso*-propylphenyl, 4-butylphenyl, 4-*iso*-butylphenyl, 4-*tert*-butyl-phenyl, 4-hexylphenyl, 4-cyclohexylphenyl, 4-octylphenyl, 4-(2-ethylhexyl)phenyl, 4-stearylphenyl, 2,3-dimethylphenyl, 2,4-dimethylphenyl, 2,5-dimethylphenyl, 2,6-dimethylphenyl, 3,4-dimethylphenyl, 3,5-dimethylphenyl, 2,4-di-*tert*-butylphenyl, 2,5-di-*tert*-butylphenyl, 2,6-di-*tert*-butylphenyl, 2,4-di-*tert*-pentylphenyl, 2,5-di-*tert*-amylphenyl, 2,5-di-*tert*-octylphenyl, 2,4-dicumylphenyl, 4-cyclohexylphenyl, (1,1'-biphenyl)-4-yl, 2,4,5-trimethylphenyl and ferrocenyl.

Examples of the arylalkyl group having 7 to 40 carbon atoms that may be represented by R¹ and R² in the Formula (1) include benzyl, 1-methyl-1-phenylethyl, 2-phenyl-propan-2-yl, 1-naphthylmethyl, 9-anthracenylmethyl, fluorenyl, indenyl, 9-fluorenylmethyl, 2-phenylpropan-2-yl, diphenylmethyl, triphenylmethyl, phenethyl, styryl and cinnamyl.

Examples of the alkylidene group having 1 to 40 carbon atoms that may be represented by R³ and T in the Formula (1) include the above-exemplified alkyl groups having 1 to 40 carbon atoms from which one hydrogen atom is withdrawn.

Examples of the arylene group having 6 to 40 carbon atoms that may be represented by R³ and T in the Formula (1) include the above-exemplified aryl groups having 6 to 40 carbon atoms from which one aromatic hydrogen atom is withdrawn.

Examples of the alkanetriyl group having 1 to 40 carbon atoms that may be represented by T in the Formula (1) include the above-exemplified alkyl groups having 1 to 40 carbon atoms from which two hydrogen atoms are withdrawn.

Examples of the alkanetetrayl group having 1 to 40 carbon atoms that may be represented by T in the Formula (1) include the above-exemplified alkyl groups having 1 to 40 carbon atoms from which three hydrogen atoms are withdrawn.

Examples of the alkyl group having 1 to 40 carbon atoms that may be represented by R⁵ and R⁶ in the Formula (2) include the same ones as those exemplified above for the alkyl group having 1 to 40 carbon atoms in the Formula (1).

Examples of the aryl group having 6 to 40 carbon atoms that may be represented by R⁵ and R⁶ in the Formula (2) include the same ones as those exemplified above for the aryl group having 6 to 40 carbon atoms in the Formula (1).

In the present invention, a hydrogen atom of a methylene group in these alkyl groups, arylalkyl groups, alkylidene groups, alkanetriyl groups and alkanetetrayl groups are optionally substituted with a substituent.

Examples of this substituent include ethylenically unsaturated groups such as vinyl, allyl, acryl and methacryl; halogen atoms such as fluorine, chlorine, bromine and iodine; acyl groups such as acetyl, 2-chloroacetyl, propionyl, octanoyl, acryloyl, methacryloyl, phenylcarbonyl(benzoyl), phthaloyl, 4-trifluoromethylbenzoyl, pivaloyl, salicyloyl, oxaloyl, stearoyl, methoxycarbonyl, ethoxycarbonyl, *tert*-butoxycarbonyl, *n*-octadecyloxycarbonyl and carbamoyl; acyloxy groups such as acetyloxy and benzoyloxy; substituted amino groups such as amino, ethylamino, methylamino, diethylamino, butylamino, cyclopentylamino, 2-ethylhexylamino, dodecylamino, anilino, chlorophenylamino, toluidino, anisidino, *N*-methyl-anilino, diphenylamino, naphthylamino, 2-pyridylamino, methoxycarbonylamino, phenoxycarbonylamino, acetylamino, benzoylamino, formylamino, pivaloylamino, lauroylamino, carbamoylamino, *N,N*-dimethylaminocarbonylamino, *N,N*-diethylaminocarbonylamino, morpholinocarbonylamino, methoxycarbonylamino, ethoxycarbonylamino, *tert*-butoxycarbonylamino, n-octadecyloxycarbonylamino, *N*-methyl-methoxycarbonylamino, phenoxycarbonylamino, sulfamoylamino, *N,N*-dimethylaminosulfonylamino, methylsulfonylamino, butylsulfonylamino and phenylsulfonylamino; a sulfonamide group; a sulfonyl group; a carboxyl group; a cyano group; a sulfo group; a hydroxyl group; a nitro group; a mercapto group; an imide group; a carbamoyl group; a sulfonamide group; a phosphonate group; a phosphate group; and salts of a carboxyl group, a sulfo group, a phosphonate group and a phosphate group. In the present invention, unless otherwise specified, each substituent may further contain a substituent.

In the present invention, an aromatic hydrogen atom in these aryl, arylalkyl and arylene groups may be substituted with a substituent.

Examples of this substituent include ethylenically unsaturated groups such as vinyl, allyl, acryl and methacryl; halogen atoms such as fluorine, chlorine, bromine and iodine; acyl groups such as acetyl, 2-chloroacetyl, propionyl, octanoyl, acryloyl, methacryloyl, phenylcarbonyl(benzoyl), phthaloyl, 4-trifluoromethylbenzoyl, pivaloyl, salicyloyl, oxaloyl, stearoyl, methoxycarbonyl, ethoxycarbonyl, *tert*-butoxycarbonyl, *n*-octadecyloxycarbonyl and carbamoyl; acyloxy groups such as acetyloxy and benzoyloxy; substituted amino groups such as amino, ethylamino, dimethylamino, diethylamino, butylamino, cyclopentylamino, 2-ethylhexylamino, dodecylamino, anilino, chlorophenylamino, toluidino, anisidino, *N*-methyl-anilino, diphenylamino, naphthylamino, 2-pyridylamino, methoxycarbonylamino, phenoxycarbonylamino, acetylamino, benzoylamino, formylamino, pivaloylamino, lauroylamino, carbamoylamino, *N,N*-dimethylaminocarbonylamino, *N,N*-diethylaminocarbonylamino, morpholinocarbonylamino, methoxycarbonylamino, ethoxycarbonylamino, *tert*-butoxycarbonylamino, *n*-octadecyloxycarbonylamino, *N*-methyl-methoxycarbonylamino, phenoxycarbonylamino, sulfamoylamino, *N,N*-dimethylaminosulfonylamino, methylsulfonylamino, butylsulfonylamino and phenylsulfonylamino; a sulfonamide group; a sulfonyl group; a carboxyl group; a cyano group; a sulfo group; a hydroxyl group; a nitro group; a mercapto group; an imide group; a carbamoyl group; a sulfonamide group; a phosphonate group; phosphorus compounds such as phosphines, phosphinites, phosphonites, phosphites, phosphoranes and phosphonates; and salts of a carboxyl group, a sulfo group, a phosphonate group and phosphorus compounds such as phosphines, phosphinites, phosphonites, phosphites, phosphoranes and phosphonates. These groups may further contain a substituent.

Specific examples of a compound used as the antioxidant having a melting point of 70°C or lower in the present invention include triphenyl phosphite, tris(nonylphenyl)phosphite, bis(2-ethylhexyl)phenyl phosphite, 2-ethylhexyldiphenyl phosphite, 2-ethylhexyldiphenyl phosphite, trioctyl phosphite, isodecyldiphenyl phosphite, diisodecyl phosphite, triisodecyl phosphite, trilauryl phosphite, tristearyl phosphite, ditridecylphenyl phosphite, tri(isotridecyl)phosphite, (1-methylethylidene)-di-4,1-phenylene-tetra(C12-15 alkyl)phosphite, tetraisodecyl bisphenol A diphosphite, oxybis(methylethylene)tetradiphenyl diphosphite, poly(dipropylene glycol)phenyl phosphite, didecylpentaerythritol diphosphite, 4,4'-butylidene-bis(3-methyl-6-*tert*-butylphenyl)butane, tris(dipropylene glycol)phosphite, pentaerythritol tetrakis(phenyltridecyl phosphite), 2-phenoxy-5,5-dimethyl-1,3,2-dioxaphosphorinane, 2,4-bis(dodecylthiomethyl)-6-methylphenol, 2,4-bis(octylthiomethyl)-6-methylphenol and 1,1-dithiobisoctadecane, among which trialkyl phosphites are preferred.

In the production method of the present invention, the antioxidant having a melting point of 70°C or lower is incorporated in an amount of 0.005 to 0.5 parts by mass, preferably 0.01 to 0.2 parts by mass, with respect to 100 parts by mass of a polymer obtained by a monomer having an ethylenically unsaturated bond. When the amount is less than 0.005 parts by mass, the resulting polymer may not be imparted with sufficient thermal stabilization effect, whereas when the amount is greater than 0.5 parts by mass, the antioxidant may bleed out on the surface of a molded article obtained by molding the resulting polymer.

As for a method of adjusting the amount of the antioxidant incorporated into the resulting polymer to be within the above-described range, the amount of the incorporated antioxidant can be adjusted to be within the above-described range by verifying the polymerization activity of the monomer having an ethylenically unsaturated bond based on a preliminary experiment and adjusting the amount of the antioxidant to be added accordingly.

In the production method of the present invention, examples of the monomer having an ethylenically unsaturated bond include ethylene, propylene, 1-butene, 1-hexene, 3-methyl-1-butene, 3-methyl-1-pentene, 4-methyl-1-pentene, vinylcycloalkane, styrene, and derivatives of these monomers. The ethylenically unsaturated monomer used in the present invention may be one or a plurality of these monomers; however, it is preferably ethylene or a combination of *α*-olefins.

The polymer obtained by the production method of the present invention is a polymer obtained by homopolymerization of any one of the above-described ethylenically unsaturated monomers or by copolymerization of monomers including an ethylenically unsaturated monomer, and examples of the polymer include polypropylenes, such as propylene homopolymers and copolymers of propylene and an *α*-olefin(s) other than propylene (e.g., ethylene-propylene copolymers and ethylene-propylene-butene copolymers); high-density polyethylenes composed of ethylene polymers; linear low-density polyethylenes; and cycloolefins.

Further, the polymer obtained by the production method of the present invention may also be a copolymer of the above-described ethylenically unsaturated monomer(s) and other monomer(s), or a copolymer containing an unconjugated diene monomer(s). Examples thereof include thermoplastic resins such as halogen-containing resins (e.g., polyvinyl chloride, polyvinylidene chloride, chlorinated rubbers, vinyl chloride-vinyl acetate copolymers, vinyl chloride-ethylene copolymers, vinyl chloride-vinylidene chloride copolymers, vinyl chloride-vinylidene chloride-vinyl acetate ternary copolymers, vinyl chloride-acrylate copolymers, vinyl chloride-maleate copolymers and vinyl chloride-cyclohexylmaleimide copolymers), petroleum resins, coumarone resins, polystyrenes, polyvinyl acetates, acrylic resins, copolymers (e.g., AS resins, ABS resins, MBS resins and heat-resistant ABS resins) composed of styrene and/or *α*-methylstyrene with other monomer(s) (e.g., maleic anhydride, phenylmaleimide, methyl methacrylate, butadiene and acrylonitrile), linear polyesters (e.g., polymethyl methacrylate, polyvinyl alcohols, polyvinyl formal, polyvinyl butyral, polyethylene terephthalate, polybutylene terephthalate and polytetramethylene terephthalate), polyamide resins (e.g., polyphenylene oxide, polycaprolactam and polyhexamethylene adipamide), polycarbonates, branched polycarbonates, polyacetals, polyphenylene sulfides, polyurethanes and cellulose-based resins; mixtures of these thermoplastic resins; and thermosetting resins such as phenol resins, urea resins, melamine resins, epoxy resins and unsaturated polyester resins. Examples of the polymer also include isoprene rubbers, butadiene rubbers, acrylonitrile-butadiene copolymer rubbers, and styrene-butadiene-copolymer rubbers.

As a method of performing a polymerization reaction of the monomer(s) having an ethylenically unsaturated bond, a commonly used method can be employed. For example, a method of performing polymerization in a liquid phase in the presence of an inert solvent such as an aliphatic hydrocarbon (e.g., butane, pentane, hexane, heptane or isooctane), an alicyclic hydrocarbon (e.g., cyclopentane, cyclohexane or methylcyclohexane), an aromatic hydrocarbon (e.g., toluene, xylene or ethylbenzene), a gasoline fraction or a hydrogenated diesel fraction; a polymerization method in which a liquefied monomer itself is used as a medium; a method of performing polymerization in a gas phase such as an inert gas atmosphere of nitrogen or the like under a condition where substantially no liquid phase is present; or a combination of two or more of these polymerization methods, can also be employed. Further, the polymerization may be performed by either a batchwise process or continuous process, and it may also be performed by a single-step polymerization method or a multi-step polymerization method.

In the production method of the present invention, examples of a preferred polymerization method include, as polymerization methods that use only a small amount of a solvent, vapor-phase polymerization and bulk polymerization.

As a method of adding the antioxidant having a melting point of 70°C or lower to the monomer(s) having an ethylenically unsaturated bond, for example, in cases where the polymerization reaction of the ethylenically unsaturated monomer(s) is performed in two steps, a method of adding the antioxidant having a melting point of 70°C or lower to a polymerization vessel for the reaction of the ethylenically unsaturated monomer(s) is performed at any point of before the first polymerization step, during the first polymerization step, after the first polymerization step, before the second polymerization step and during the second polymerization step can be employed. Further, the antioxidant having a melting point of 70°C or lower may be directly added to the polymerization vessel, or it may be added after being mixed with a solvent in advance.

Examples of the solvent to be mixed with the antioxidant having a melting point of 70°C or lower include aliphatic hydrocarbons such as butane, pentane, hexane, heptane and isooctane; alicyclic hydrocarbons such as cyclopentane, cyclohexane and methylcyclohexane; aromatic hydrocarbons such as benzene, toluene, xylene and ethylbenzene; mineral oils; gasoline fractions; and hydrogenated diesel fractions.

In the production method of the present invention, the solvent is preferably one which does not reduce the activity of a polymerization catalyst, and it is particularly preferably heptane.

In cases where the antioxidant having a melting point of 70°C or lower is mixed with a solvent, it is preferable that the solvent is used in such an amount that less than 5 parts by mass of the solvent is incorporated with respect to 100 parts by mass of the resulting polymer. The amount of the solvent to be mixed with 100 g of the antioxidant having a melting point of 70°C or lower is in a range of preferably 1 to 4,000 g, more preferably 1 to 1,000 g. When the amount of the solvent is greater than this range, the effects of the present invention may not be attained because the solvent remains in the resulting polymer.

The content of the solvent with respect to 100 parts by mass of a polymer obtained by the production method of the present invention is preferably 0.1 to 5 parts by mass, more preferably 0.1 to 2 parts by mass. When the content of the solvent exceeds 5 parts by mass, foaming may occur during molding of the polymer and the polymerization activity may be adversely affected, which are economically disadvantageous.

In the production method of the present invention, for example, an active hydrogen compound, a particulate carrier, an organoaluminum compound, an ion-exchanging layered compound, an inorganic silicate or a catalyst component other than the below-described polymerization catalyst, such as a carrier, may also be incorporated in such an amount that does not inhibit the polymerization.

In the production method of the present invention, the polymerization catalyst is not particularly restricted, and a known polymerization catalyst can be used. Examples thereof include compounds of transition metals belonging to any of Groups 3 to 11 of the periodic table (such as titanium, zirconium, hafnium, vanadium, iron, nickel, lead, platinum, yttrium and samarium), and representative examples of polymerization catalyst that can be used include Ziegler catalysts; Ziegler-Natta catalysts composed of a titanium-containing solid transition metal component and an organic metal component; Brookhart catalysts, which are compounds in which a hetero atom of nitrogen, oxygen, sulfur, phosphorus or the like is bound to a transition metal belonging to any of Groups 4 to 10 of the periodic table; and metallocene catalysts composed of a transition metal compound belonging to any of Groups 4 to 6 of the periodic table, which has at least one cyclopentadienyl skeleton, and a co-catalyst component. The use of an electron-donating compound is preferred because a high-quality polymer can be obtained.

Examples of the Ziegler catalysts include those catalysts that are produced by subjecting titanium trichloride or a titanium trichloride composition, which is obtained by reducing titanium tetrachloride with organoaluminum or the like, to a treatment with an electron-donating compound and then activating the resultant (see, for example, Japanese Unexamined Patent Application Publication Nos. S47-34478, S58-23806 and S63-146906); those catalysts that are composed of a titanium trichloride composition, which is obtained by reducing titanium tetrachloride with an organoaluminum compound and then treating the resultant with a variety of electron donors and electron acceptors, an organoaluminum compound and an aromatic carboxylic acid ester (see, for example, Japanese Unexamined Patent Application Publication Nos. S56-100806, S56-120712 and S58-104907); and supported-type catalysts that are composed of titanium tetrachloride and a variety of electron donors that are supported on magnesium chloride (see, for example, Japanese Unexamined Patent Application Publication Nos. S57-63310, S58-157808, S58-83006, S58-5310, S61-218606, S63-43915 and S63-83116).

Examples of the metallocene catalysts include the transition metal metallocene catalyst described in Japanese Unexamined Patent Application Publication No. H9-12621; and those transition metal metallocene catalysts that are primarily used for polymerization of polypropylene, which are described in Japanese Unexamined Patent Application Publication Nos. H5-043616, H5-295022, H5-301917, H6-239914, H6-239915, H6-239917, H7-082311, H7-228621, H7-330820, H8-059724, H8-085707, H8-085708, H8-127613, H10-226712, H10-259143, H10-265490, H11-246582, H11-279189, H11-349633, 2000-229990, 2001-206914, 2002-37795, 2002-194015 and 2002-194016, Japanese Unexamined Patent Application Publication (Translation of PCT Application) No. 2002-535339, WO99/37654, WO99/45014 and WO00/8036.

Examples of the electron-donating compound include ether-based compounds, ester-based compounds, ketone-based compounds and alkoxysilane-based compounds. These electron-donating compounds may be added individually, or a plurality thereof may be added as required.

Examples of the ether-based compounds include diethyl ether, dipropyl ether, diisopropyl ether, di-*n*-butyl ether, diethylene glycol dimethyl ether, propylene glycol dimethyl ether, ethylene oxide, tetrahydrofuran, 2,2,5,5-tetramethyl tetrahydrofuran and dioxane.

Examples of the ester-based compounds include methyl acetate, ethyl acetate, *n*-propyl acetate, isopropyl acetate, methyl propionate, ethyl propionate, *n*-propyl propionate, methyl methacrylate, ethyl methacrylate, *n*-propyl methacrylate, ethyl phenylacetate, methyl benzoate, ethyl benzoate, phenyl benzoate, methyl toluate, ethyl toluate, methyl anisate, ethyl anisate, methyl methoxybenzoate, ethyl methoxybenzoate, methyl methacrylate, ethyl methacrylate, dimethyl phthalate, diethyl phthalate, dipropyl phthalate, dibutyl phthalate, diisobutyl phthalate, dihexyl phthalate, *γ*-butyrolactone and ethyl cellosolve.

Examples of the ketone-based compounds include acetone, diethyl ketone, methyl ethyl ketone and acetophenone.

Examples of the alkoxysilane-based compounds include tetramethoxysilane, ethyltrimethoxysilane, propyltrimethoxysilane, isopropyltrimethoxysilane, *tert*-butyltrimethoxysilane, isobutyltrimethoxysilane, phenyltrimethoxysilane, cyclohexyltrimethoxysilane, diethyldimethoxysilane, dipropyldimethoxysilane, diisopropyldimethoxysilane, diphenyldimethoxysilane, *tert*-butylmethyldimethoxysilane, *tert*-butylethyldimethoxysilane, *tert*-butyl-*n*-propyldimethoxysilane, *tert*-butylisopropyldimethoxysilane, cyclohexylmethyldimethoxysilane, tetraethoxysilane, ethyltriethoxysilane, propyltriethoxysilane, isopropyltriethoxysilane, *tert*-butyltriethoxysilane, phenyltriethoxysilane, cyclohexyltriethoxysilane, diethyldiethoxysilane, dipropyldiethoxysilane, diisopropyldiethoxysilane, diphenyldiethoxysilane, *tert*-butylmethyldiethoxysilane, cyclohexylmethyldiethoxysilane and dicyclopentyldimethoxysilane.

The type of the above-described carrier is not particularly restricted, and examples of the carrier include inorganic carriers such as inorganic oxides and organic carriers such as porous polyolefins. A plurality of these carriers may be used in combination as well. Examples of the inorganic carriers include silica, alumina, magnesium oxide, zirconium oxide, titanium oxide, iron oxide, calcium oxide and zinc oxide. In addition, examples of other inorganic carriers include magnesium halides such as magnesium chloride and magnesium bromide; magnesium alkoxides such as magnesium ethoxide; and ion-exchanging layered compounds.

The term "ion-exchanging layered compound" refers to a compound that has a crystalline structure in which planes constituted by ionic bonds and the like are laminated in parallel with each other through weak bonding force and contains exchangeable ions. Specific examples of such an ion-exchanging layered compound include kaolin, bentonite, talc, kaolinite, vermiculite, montmorillonite, mica, *α*-Zr(HAsO₄)₂·H₂O, *α*-Zr(HPO₄)₂·H₂O, *α*-Sn(HPO₄)₂·H₂O and *γ*-Ti(NH₄PO₄)₂·H₂O.

Examples of the organic carriers include polyesters such as polyethylenes, polypropylenes, polystyrenes, ethylene-butene copolymers, ethylene-propylene copolymers, polymethacrylates, polyacrylates, polyacrylonitriles, polyamides, polycarbonates and polyethylene terephthalates; and polyvinyl chlorides. These organic carriers may also be cross-linked as in the case of, for example, a styrene-divinylbenzene copolymer. Further, these organic carriers on which a catalyst is chemically bound can also be used.

These carriers have a particle size (volume-average) in a range of usually 0.1 to 300 µm, preferably 1 to 200 µm, more preferably 10 to 100 µm. When the particle size is smaller than 1 µm, the resulting polymer is likely to be in a fine powder form, whereas when the particle size is excessively large, coarse particles are generated. Therefore, the particle size of the carrier should be selected in accordance with the desired particle shape. The above-described carrier has a pore volume of usually 0.1 to 5 cm³/g, preferably 0.3 to 3 cm³/g. The pore volume can be measured by, for example, a BET method or mercury porosimetry.

As a polymerization vessel to be used for the polymerization reaction, a continuous reaction vessel installed in an existing polymerization equipment can be used as is. In the present invention, there is no particular restriction on the size, shape, material and the like of the existing polymerization equipment.

In the above-described polymer, as required, a resin additive usually used in a polymer obtained from a monomer having an ethylenically unsaturated bond may also be incorporated. As for a method of incorporating such a resin additive, other resin additive may be added at the time of polymerizing the monomer having an ethylenically unsaturated bond as long as it does not inhibit the polymerization. Alternatively, after mixing the resin additive in an amount appropriate for the purpose thereof with the above-described polymer or mixing the polymer and the resin additive with a resin different from the polymer, the resulting mixture may be melt-kneaded to be granulated and molded using a molding machine such as an extruder. Further, the resin additive may be the antioxidant used in the present invention that has a melting point of 70°C or lower.

Examples of the above-described other additive include a phenolic antioxidant, a phosphorus-based antioxidant, an ultraviolet absorber, a hindered amine compound, a heavy metal inactivator, a nucleating agent, a flame retardant, a metallic soap, a hydrotalcite, a filler, a lubricant, an antistatic agent, a pigment, a dye and a plasticizer.

Examples of the phenolic antioxidant include 2,6-di-*tert*-butyl-4-ethylphenol, 2-*tert*-butyl-4,6-dimethylphenol, styrenated phenol, 2,2'-methylene-bis(4-ethyl-6-*tert*-butylphenol), 2,2'-thiobis-(6-*tert*-butyl-4-methylphenol), 2,2'-thiodiethylene-bis[3-(3,5-di-*tert*-butyl-4-hydroxyphenyl)propionate], 2-methyl-4,6-bis(octylsulfanylmethyl)phenol, 2,2'-isobutylidene-bis(4,6-dimethylphenol), isooctyl-3-(3,5-di-*tert*-butyl-4-hydroxyphenyl)propionate, *N,N*'-hexane-1,6-diylbis[3-(3,5-di-*tert*-butyl-4-hydroxyphenyl)propionamide, 2,2'-oxamide-bis[ethyl-3-(3,5-di-*tert*-butyl-4-hydroxyphenyl)propionate], 2-ethylhexyl-3-(3',5'-di-*tert*-butyl-4'-hydroxyphenyl)propionate, 2,2'-ethylene-bis(4,6-di-*tert*-butylphenol), 3,5-bis(1,1-dimethylethyl)-4-hydroxy-benzenepropanoate, C13-15 alkyl esters, 2,5-di-*tert*-amylhydroquinone, hindered phenol polymer (AO.OH998 (trade name), manufactured by ADEKA Palmarole), 2,2'-methylene-bis[6-(1-methylcyclohexyl)-*p*-cresol], 2-*tert*-butyl-6-(3-*tert*-butyl-2-hydroxy-5-methylbenzyl)-4-methylphenyl acrylate, 2-[1-(2-hydroxy-3,5-di-*tert*-pentylphenyl)ethyl]-4,6-di-*tert*-pentylphenyl acrylate, 6-[3-(3-*tert*-butyl-4-hydroxy-5-methyl)propoxy]-2,4,8,10-tetra-*tert*-butylbenzo[*d*,*f*][1,3,2]-dio xaphosphepin, hexamethylene-bis[3-(3,5-di-*tert*-butyl-4-hydroxyphenyl)propionate, calcium bis[monoethyl(3,5-di-*tert*-butyl-4-hydroxybenzyl)phosphonate, a reaction product between 5,7-bis(1,1-dimethylethyl)-3-hydroxy-2(3*H*)-benzofuranone and *o*-xylene, 2,6-di-*tert*-butyl-4-(4,6-bis(octylthio)-1,3,5-triazine-2-ylamino)phenol, DL-a-tocophenol (vitamin E), 2,6-bis(α-methylbenzyl)-4-methylphenol, bis[3,3-bis-(4'-hydroxy-3'-*tert*-butyl-phenyl)butyric acid]glycol ester, 2,6-di-*tert*-butyl-*p*-cresol, 2,6-diphenyl-4-octadecyloxyphenol, stearyl(3,5-di-*tert*-butyl-4-hydroxyphenyl)propionate, distearyl(3,5-di-*tert*-butyl-4-hydroxybenzyl)phosphonate, tridecyl-3,5-di-*tert*-butyl-4-hydroxybenzyl thioacetate, thiodiethylene-bis[(3,5-di-*tert*-butyl-4-hydroxyphenyl)propionate], 4,4'-thiobis(6-*tert*-butyl-*m*-cresol), 2-octylthio-4,6-di(3,5-di-*tert*-butyl-4-hydroxyphenoxy)-*s*-triazine, 2,2'-methylene-bis(4-methyl-6-*tert*-butylphenol), bis[3,3-bis(4-hydroxy-3-*tert*-butylphenyl)butyric acid]glycol ester, 4,4'-butylidene-bis(2,6-di-*tert*-butylphenol), 4,4'-butylidene-bis(6-*tert*-butyl-3-methylphenol), 2,2'-ethylidene-bis(4,6-di-*tert*-butylphenol), 1,1,3-tris(2-methyl-4-hydroxy-5-*tert*-butylphenyl)butane, bis[2-*tert*-butyl-4-methyl-6-(2-hydroxy-3-*tert*-butyl-5-methylbenzyl)phenyl]terephthalate, 1,3,5-tris(2,6-dimethyl-3-hydroxy-4-*tert*-butylbenzyl)isocyanurate, 1,3,5-tris(3,5-di-*tert*-butyl-4-hydroxybenzyl)isocyanurate, 1,3,5-tris(3,5-di-*tert*-butyl-4-hydroxybenzyl)-2,4,6-trimethylbenzene, 1,3,5-tris[(3,5-di-*tert*-butyl-4-hydroxyphenyl)propionyloxyethyl]isocyanurate, tetrakis[methylene-3-(3',5'-di-*tert*-butyl-4'-hydroxyphenyl)propionate]methane, 2-*tert*-butyl-4-methyl-6-(2-acryloyloxy-3-*tert*-butyl-5-methylbenzyl)phenol, 3,9-bis[2-(3-*tert*-butyl-4-hydroxy-5-methylhydrocinnamoyloxy)-1,1-dimethylethyl]-2,4,8,10-t etraoxaspiro[5.5]undecane, triethylene glycol-bis[*β*-(3-*tert*-butyl-4-hydroxy-5-methylphenyl)propionate], stearyl-3-(3,5-di-*tert*-butyl-4-hydroxyphenyl)propionic acid amide, palmityl-3-(3,5-di-*tert*-butyl-4-hydroxyphenyl)propionic acid amide, myristyl-3-(3,5-di-*tert*-butyl-4-hydroxyphenyl)propionic acid amide and lauryl-3-(3,5-di-*tert*-butyl-4-hydroxyphenyl)propionic acid amide.

Examples of the phosphorus-based antioxidant include triphenyl phosphite, trisnonylphenyl phosphite, tris(2,4-di-*tert*-butylphenyl)phosphite, tris(2,4-di-*tert*-butyl-5-methylphenyl)phosphite, tris[2-*tert*-butyl-4-(3-*tert*-butyl-4-hydroxy-5-methylphenylthio)-5-methylphenyl]phosphite, tridecyl phosphite, octyldiphenyl phosphite, di(decyl)monophenyl phosphite, di(tridecyl)pentaerythritol diphosphite, di(nonylphenyl)pentaerythritol diphosphite, bis(2,4-di-*tert*-butylphenyl)pentaerythritol diphosphite, bis(2,6-di-*tert*-butyl-4-methylphenyl)pentaerythritol diphosphite, bis(2,4,6-tri-*tert*-butylphenyl)pentaerythritol diphosphite, bis(2,4-dicumylphenyl)pentaerythritol diphosphite, tetra(tridecyl)isopropylidenediphenol diphosphite, tetra(tridecyl)-4,4'-*n*-butylidene-bis(2-*tert*-butyl-5-methylphenol)diphosphite, hexa(tridecyl)-1,1,3-tris(2-methyl-4-hydroxy-5-*tert*-butylphenyl)butane triphosphite, tetrakis(2,4-di-*tert*-butylphenyl)biphenylene diphosphonite, 9,10-dihydro-9-oxa-10-phosphaphenanthrene-10-oxide, 2,2'-methylene-bis(4,6-di-*tert*-butylphenyl)-2-ethylhexyl phosphite, 2,2'-methylene-bis(4,6-di-*tert*-butylphenyl)-octadecyl phosphite, 2,2'-ethylidene-bis(4,6-di-*tert*-butylphenyl)fluorophosphite, tris(2-[(2,4,8,10-tetrakis-*tert*-butyldibenzo[*d*,*f*][1,3,2]dioxaphosphepin-6-yl)oxy]ethyl)amine, and phosphites of 2-ethyl-2-butylpropylene glycol and 2,4,6-tri-*tert*-butylphenol.

Examples of the ultraviolet absorber include 2-hydroxybenzophenones such as 2,4-dihydroxybenzophenone, 2-hydroxy-4-methoxybenzophenone, 2-hydroxy-4-octoxybenzophenone and 5,5'-methylene-bis(2-hydroxy-4-methoxybenzophenone); 2-(2-hydroxyphenyl)benzotriazoles such as 2-(2-hydroxy-5-methylphenyl)benzotriazole, 2-(2-hydroxy-5-*tert*-octylphenyl)benzotriazole, 2-(2-hydroxy-3,5-di-*tert*-butylphenyl)-5-chlorobenzotriazole, 2-(2-hydroxy-3-*tert*-butyl-5-methylphenyl)-5-chlorobenzotriazole, 2-(2-hydroxy-3,5-dicumylphenyl)benzotriazole, 2,2'-methylene-bis(4-*tert*-octyl-6-benzotriazolylphenol), polyethylene glycol esters of 2-(2-hydroxy-3-*tert*-butyl-5-carboxyphenyl)benzotriazole, 2-[2-hydroxy-3-(2-acryloyloxyethyl)-5-methylphenyl]benzotriazole, 2-[2-hydroxy-3-(2-methacryloyloxyethyl)-5-*tert*-butylphenyl]benzotriazole, 2-[2-hydroxy-3-(2-methacryloyloxyethyl)-5-*tert*-octylphenyl]benzotriazole, 2-[2-hydroxy-3-(2-methacryloyloxyethyl)-5-*tert*-butylphenyl]-5-chlorobenzotriazole, 2-[2-hydroxy-5-(2-methacryloyloxyethyl)phenyl]benzotriazole, 2-[2-hydroxy-3-*tert*-butyl-5-(2-methacryloyloxyethyl)phenyl]benzotriazole, 2-[2-hydroxy-3-*tert*-amyl-5-(2-methacryloyloxyethyl)phenyl]benzotriazole, 2-[2-hydroxy-3-*tert*-butyl-5-(3-methacryloyloxypropyl)phenyl]-5-chlorobenzotriazole, 2-[2-hydroxy-4-(2-methacryloyloxymethyl)phenyl]benzotriazole, 2-[2-hydroxy-4-(3-methacryloyloxy-2-hydroxypropyl)phenyl]benzotriazole and 2-[2-hydroxy-4-(3-methacryloyloxypropyl)phenyl]benzotriazole; 2-(2-hydroxyphenyl)-4,6-diaryl-1,3,5-triazines such as 2-(2-hydroxy-4-methoxyphenyl)-4,6-diphenyl-1,3,5-triazine, 2-(2-hydroxy-4-hexyloxyphenyl)-4,6-diphenyl-1,3,5-triazine, 2-(2-hydroxy-4-octoxyphenyl)-4,6-bis(2,4-dimethylphenyl)-1,3,5-triazine, 2-[2-hydroxy-4-(3-C12 to C13 mixed alkoxy-2-hydroxypropoxy)phenyl]-4,6-bis(2,4-dimethylphenyl)-1,3,5-triazine, 2-[2-hydroxy-4-(2-acryloyloxyethoxy)phenyl]-4,6-bis(4-methylphenyl)-1,3,5-triazine, 2-(2,4-dihydroxy-3-allylphenyl)-4,6-bis(2,4-dimethylphenyl)-1,3,5-triazine and 2,4,6-tris(2-hydroxy-3-methyl-4-hexyloxyphenyl)-1,3,5-triazine; benzoates such as phenyl salicylate, resorcinol monobenzoate, 2,4-di-*tert*-butylphenyl-3,5-di-*tert*-butyl-4-hydroxybenzoate, octyl(3,5-di-*tert*-butyl-4-hydroxy)benzoate, dodecyl(3,5-di-*tert*-butyl-4-hydroxy)benzoate, tetradecyl(3,5-di-*tert*-butyl-4-hydroxy)benzoate, hexadecyl(3,5-di-*tert*-butyl-4-hydroxy)benzoate, octadecyl(3,5-di-*tert*-butyl-4-hydroxy)benzoate and behenyl(3,5-di-*tert*-butyl-4-hydroxy)benzoate; substituted oxanilides such as 2-ethyl-2'-ethoxyoxanilide and 2-ethoxy-4'-dodecyloxanilide; cyanoacrylates such as ethyl-*α*-cyano-*β,β*-diphenylacrylate and methyl-2-cyano-3-methyl-3-(*p*-methoxyphenyl)acrylate; and a variety of metal salts and metal chelates, particularly salts and chelates of nickel and chromium.

Examples of the hindered amine compound include 2,2,6,6-tetramethyl-4-piperidyl stearate, 1,2,2,6,6-pentamethyl-4-piperidyl stearate, 2,2,6,6-tetramethyl-4-piperidyl benzoate, bis(2,2,6,6-tetramethyl-4-piperidyl)sebacate, tetrakis(2,2,6,6-*tert*-octylamino-s-triazine)polycondensates, 1,5,8,12-tetrakis[2,4-bis(*N*butyl-*N*(2,2,6,6-tetramethyl-4-piperidyl)amino)-*s*-triazine-6-yl]-1, 5,8,12-tetraazadodecane, 1,5,8,12-tetrakis[2,4-bis(*N*-butyl-*N*-(1,2,2,6,6-pentamethyl-4-piperidyl)amino)-*s*-triazine-6-yl] -1,5,8,12-tetraazadodecane, 1,6,11-tris[2,4-bis(*N*-butyl-*N*-(2,2,6,6-tetramethyl-4-piperidyl)amino)-s-triazine-6-yl]aminoun decane, 1,6,11-tris[2,4-bis(*N*-butyl-*N*-(1,2,2,6,6-pentamethyl-4-piperidyl)amino)-*s*-triazine-6-yl]amino undecane, bis {4-(1-octyloxy-2,2,6,6-tetramethyl)piperidyl} decanedionate, bis {4-(2,2,6,6-tetramethyl-1-undecyloxy)piperidyl}carbonate, and TINUVIN NOR 371 manufactured by Ciba Specialty Chemicals K.K.

Examples of the heavy metal inactivator include salicylamide-1,2,4-triazol-3-yl, bis-salicylic acid hydrazide, dodecanedioyl-bis(2-(2-hydroxybenzoyl)hydrazide) and bis(3-(3,5-di-*tert*-butyl-4-hydroxyphenyl)propionic acid)hydrazide.

Examples of the nucleating agent include metal carboxylates such as sodium benzoate, aluminum 4-*tert*-butylbenzoate, sodium adipate and 2-sodium-bicyclo[2.2.1]heptane-2,3-dicarboxylate; metal phosphates such as sodium-bis(4-*tert*-butylphenyl)phosphate, sodium-2,2'-methylene-bis(4,6-di-*tert*-butylphenyl)phosphate and -2,2'-methylene-bis(4,6-di-*tert*-butylphenyl)phosphate; polyhydric alcohol derivatives such as dibenzylidene sorbitol, bis(methylbenzylidene)sorbitol, bis(*p*-ethylbenzylidene)sorbitol and bis(dimethylbenzylidene)sorbitol; and amide compounds such as *N,N',N"*-tris[2-methylcyclohexyl]-1,2,3-propane tricarboxamide (RIKACLEAR PC1), *N,N',N"*-tricyclohexyl-1,3,5-benzene tricarboxamide, *N,N'*-dicyclohexyl-naphthalene dicarboxamide and 1,3,5-tri(dimethylisopropoylamino)benzene.

Examples of the flame retardant include aromatic phosphates such as triphenyl phosphate, tricresyl phosphate, trixylenyl phosphate, cresyldiphenyl phosphate, cresyl-2,6-xylenyl phosphate and resorcinol-bis(diphenylphosphate); phosphonates such as divinyl phenylphosphonate, diallyl phenylphosphonate and (1-butenyl)phenylphosphonate; phosphinates such as phenyl diphenylphosphinate, methyl diphenylphosphinate and 9,10-dihydro-9-oxa-10-phosphaphenanthlene-10-oxide derivatives; phosphazene compounds such as bis(2-allylphenoxy)phosphazene and dicresylphosphazene; phosphorus-based flame retardants such as melamine phosphate, melamine pyrophosphate, melamine polyphosphate, melam polyphosphate, ammonium polyphosphate, phosphorus-containing vinylbenzyl compounds and red phosphorus; metal hydroxides such as magnesium hydroxide and aluminum hydroxide; and bromine-based flame retardants such as brominated bisphenol A-type epoxy resins, brominated phenol novolac-type epoxy resins, hexabromobenzene, pentabromotoluene, ethylene-bis(pentabromophenyl), ethylene-bis-tetrabromophthalimide, 1,2-dibromo-4-(1,2-dibromoethyl)cyclohexane, tetrabromocyclooctane, hexabromocyclododecane, bis(tribromophenoxy)ethane, brominated polyphenylene ether, brominated polystyrene, 2,4,6-tris(tribromophenoxy)-1,3,5-triazine, tribromophenyl maleimide, tribromophenyl acrylate, tribromophenyl methacrylate, tetrabromobisphenol A-type dimethacrylate, pentabromobenzyl acrylate and brominated styrene.

Preferred examples of the filler include talc, mica, calcium carbonate, calcium oxide, calcium hydroxide, magnesium carbonate, magnesium hydroxide, magnesium oxide, magnesium sulfate, aluminum hydroxide, barium sulfate, glass powder, glass fibers, clays, dolomite, silica, alumina, potassium titanate whiskers, wollastonite and fibrous magnesium oxysulfate. Thereamong, those fillers having an average particle size (in the case of a spherical or plate-form filler) or an average fiber diameter (in the case of a needle-form or fibrous filler) of 5 µm or less are preferred.

The above-described lubricant is added for the purposes of imparting the surface of the resulting molded article with lubricity and improving the damage-preventing effect. Examples of the lubricant include unsaturated fatty acid amides such as oleic acid amide and erucic acid amide; and saturated fatty acid amides such as behenic acid amide and stearic acid amide. These lubricants may be used individually, or two or more thereof may be used in combination.

The above-described antistatic agent is added for the purposes of reducing the electrostaticity of the resulting molded article and inhibiting dust adhesion caused by electrostatic charge. There is a wide variety of such antistatic agents, including cationic, anionic and non-ionic ones. Preferred examples thereof include polyoxyethylene alkylamines, polyoxyethylene alkylamides, fatty acid esters thereof, and glycerin fatty acid esters. These antistatic agents may be used individually, or two or more thereof may be used in combination. Further, the antistatic agent(s) is/are added in an amount of preferably 0.03 to 2 parts by mass, more preferably 0.04 to 1 part by mass, with respect to 100 parts by mass of the above-described polymer. When the amount of the antistatic agent(s) is excessively small, the antistatic effect is insufficient, whereas when the amount is excessively large, the antistatic agent(s) may bleed out to the surface and cause deterioration in the physical properties of the polymer.

The amount of such other additives to be used in the present invention is preferably in a range of from an amount at which the effect of the addition is exerted to an amount at which an improvement in the effect of the addition is no longer observed. Preferred amounts of the respective additives to be used with respect to 100 parts by mass of the above-described polymer are as follows: 0.1 to 20 parts by mass of a plasticizer(s), 1 to 50 parts by mass of a filler(s), 0.001 to 1 part by mass of a surface treatment agent(s), 0.001 to 10 parts by mass of a phenolic antioxidant(s), 0.001 to 10 parts by mass of a phosphorus-based antioxidant(s), 0.001 to 5 parts by mass of an ultraviolet absorber(s), 0.01 to 1 part by mass of a hindered amine compound(s), 1 to 50 parts by mass of a flame retardant(s), 0.03 to 2 parts by mass of a lubricant(s), and 0.03 to 2 parts by mass of an antistatic agent(s). These additives may be used individually, or two or more thereof may be used in combination.

The polymer obtained by the production method of the present invention can be molded into a molded article by a known molding method such as extrusion molding, injection molding, hollow molding or compression molding. Examples of the applications of the thus obtained molded article include interior and exterior components of automobiles; food containers; cosmetic and clothing containers; bottles such as food bottles, beverage bottles, cooking oil bottles and seasoning bottles; packaging materials such as food packaging materials, wrapping materials and transport packaging materials; sheets and films, such as protection films of electronic materials and protection sheets of electric appliances; fibers; miscellaneous daily goods; and toys.

### EXAMPLES

The present invention will now be described in more detail by way of examples and comparative examples thereof; however, the present invention is not restricted thereto by any means.

### [Production Example 1] (Bulk Polymerization Method)

According to the below-described procedures ([1] Preparation of Catalyst Slurry, [2] Prepolymerization and [3] Polymerization of Olefin Monomer), an olefin-based polymer was obtained by a bulk polymerization method.

### [1] Preparation of Catalyst Slurry

After preparing a homogeneous solution by adding and allowing 4.76 g (50 mmol) of anhydrous magnesium chloride, 25 mL of decane and 23.4 mL (150 mmol) of 2-ethylhexyl alcohol to react under heating at 130°C for 2 hours, 1.11 g (7.5 mmol) of phthalic anhydride was added to the thus obtained homogeneous solution and the resulting mixture was maintained with stirring at 130°C for 1 hour to dissolve phthalic anhydride in the homogeneous solution. Then, this homogeneous solution was cooled to room temperature and the entire amount thereof was added dropwise to 200 mL (1.8 mol) of titanium tetrachloride, which had been kept at -20°C, over a period of 1 hour. Thereafter, the resultant was heated to 110°C over a period of 4 hours. Once the temperature reached 110°C, 2.68 mL (12.5 mmol) of diisobutyl phthalate was added, and the resulting mixture was allowed to react for 2 hours with stirring while maintaining the temperature at 110°C. After the completion of the reaction, the resulting residue was recovered by hot filtration and re-suspended in 200 ml of titanium tetrachloride, and this suspension was heated to 110°C and allowed to react for 2 hours. After the completion of the reaction, the resulting residue was recovered again by hot filtration and thoroughly washed with 110°C decane and hexane until no free titanium compound was detected in the washings, thereby obtaining a solid titanium catalyst component. When a portion of this solid titanium catalyst component was dried and the composition of the catalyst was analyzed, it was found that the solid titanium catalyst component contained 3.1% by mass of titanium, 56.0% by mass of chlorine, 17.0% by mass of magnesium and 20.9% by mass of isobutyl phthalate.

A catalyst slurry was prepared by adding heptane to this solid titanium catalyst component synthesized by the above-described production method such that the slurry had a concentration of 5 mg/mL.

### [2] Prepolymerization

The polymerization reaction rate was determined before adding an antioxidant having a melting point of 70°C or lower.

In a nitrogen-substituted 1,000-ml pressure-resistant reaction vessel, 74 mg of triethylaluminum, 14.85 mg (0.065 mmol) of dicyclopentyldimethoxysilane and the catalyst slurry prepared in the above [1] (3.3 µmol as a titanium component) were added and stirred for 2 minutes. Then, the atmosphere in the pressure-resistant reaction vessel was replaced with propylene, hydrogen was injected thereto at a hydrogen pressure of 0.2 barG, and prepolymerization was performed at 25°C for 3 minutes while continuously introducing propylene to the pressure-resistant reaction vessel with its total pressure being maintained at 38.2 barG. After the prepolymerization, the temperature was raised to 70°C while maintaining the propylene pressure at 38.2 barG, thereby performing polymerization reaction for 1 hour. After the completion of the reaction, propylene was purged to obtain 200 g of a white solid polymer. The thus obtained polymer had a melt flow rate of 20 g/10 min at 230°C in all cases.

### [3] Polymerization of Olefin Monomer (Bulk Polymerization Method)

The polymerization activity was calculated based on the yield of the polymer obtained in the above-described prepolymerization process, and each antioxidant shown in Table 1 was added to a nitrogen-substituted 1,000-ml pressure-resistant reaction vessel in an adjusted amount such that the antioxidant was incorporated in the respective amount shown in Table 1. In cases where a mixture of an antioxidant and a solvent was added, the antioxidant and the solvent were mixed under a nitrogen atmosphere in accordance with the incorporated amount shown in Table 2 and then added to the nitrogen-substituted 1,000-ml pressure-resistant reaction vessel.

Then, a polymer was obtained by performing polymerization under the same conditions as in the above-described preliminary experiment, except that each antioxidant or a mixture of each antioxidant and solvent was added such that the antioxidant was incorporated in the respective amount shown in Table 1 or 3. The thus obtained polymer had a melt flow rate of 20 g/10 min at 230°C in all cases. In Tables below, the compounds shown in the column of "Antioxidant" represent the following product names.
3010: ADEKA STAB 3010 (trade name), manufactured by ADEKA Corporation (triisodecyl phosphite, liquid at normal temperature (25°C))
3012: ADEKA STAB 3012 (trade name), manufactured by ADEKA Corporation (tristearyl phosphite, liquid at normal temperature (25°C))
2112: ADEKA STAB 2112 (trade name), manufactured by ADEKA Corporation (tris(2,4-di-*tert*-butylphenyl)phosphite, melting point: 180 to 190°C)

### (1) Polymerization Activity

The effect on the polymerization behavior was evaluated based on the yield of the respective polymers obtained above. The polymerization activity (g-PP/g-catalyst) represents the amount of a polymer synthesized per 1 g of a catalyst.

### (2) Stabilization Effect

The thus obtained polymers were each granulated four times using a uniaxial extruder (apparatus: LABO-PLASTOMILL µ, manufactured by Toyo Seiki Seisaku-sho, Ltd.; extrusion temperature: 230°C, screw speed: 50 rpm), and the stabilization effect of each polymer was evaluated by measuring the weight-average molecular weight of the polymer.

The weight-average molecular weight was measured by gel permeation chromatography (apparatus: Model 350 HTGPC manufactured by Viscotek, columns: TSKgel GMH_{HR}-H HT, TSKgel G200H_{HR}(20)HT and TSKguard column HHR (30)HT manufactured by Tosoh Corporation, measurement temperature: 145°C, solvent: o-dichlorobenzene, concentration: 30 mg/10 g) for each polymer before the above-described extrusion process as well as a pellet obtained by extruding the pellet four times. The results thereof are shown in Tables 1 and 3 below.

### (3) Presence or Absence of Foaming during Granulation

In the evaluation of the stabilization effect, the presence or absence of foaming was checked at the time of extruding each of the thus obtained polymers for the first time. The results thereof are shown in Tables 1 and 3 below.

### (4) Working Environment

In the polymerization of an ethylenically unsaturated monomer, an evaluation "NG" was given when dust generation was observed during the feeding of the raw materials and an evaluation "Good" was given when no dust generation was observed. The results thereof are shown in Tables 1 and 3 below.

### (5) Fluidity Test

The fluidity of each of the thus obtained polymers was evaluated by the following method.

In a funnel which was constituted by a conical body having a circular bottom of 160 mm in diameter and a tubular extension of 17 mm in opening diameter connected to the apex of the conical body and had an angle of 55° between the side of the conical body and the axis extending from the extension to the apex in the vertical direction, the opening at the end of the extension was plugged to prevent a material from being drained from the extension of the funnel and, after placing a receptacle underneath the funnel and arranging the funnel with its extension side facing down, 180 g of each of the thus obtained polymers was loaded to the opening side of the funnel conical body. Then, the material plugging the extension was removed and the polymer was allowed to free-fall onto the receptacle. Thereafter, the weight of the polymer fell onto the receptacle was measured and the ratio thereof with respect to the loaded 180 g was calculated to evaluate the fluidity. A larger value represents superior fluidity, with a value of 100% representing that the entire amount of the loaded polymer fell onto the receptacle. The results thereof are shown in Tables 1 and 3 below.

**[Table 1]**

| | Antioxidant | Amount of added antioxidant*¹ | Polymerization activity (g-PP/g-cat) | Stabilization effect*² | Foaming during extrusion | Working environment | Fluidity (%) |
|---|---|---|---|---|---|---|---|
| Example 1-1 | 3010¹⁾ | 0.01 | 39,000 | 310/470 | absent | Good | 100 |
| Example 1-2 | 3010¹⁾ | 0.03 | 41,000 | 350/470 | absent | Good | 100 |
| Example 1-3 | 3010¹⁾ | 0.2 | 40,000 | 400/470 | absent | Good | 100 |
| Example 1-4 | 3010¹⁾ phenolic AO²⁾ | 0.03 0.01 | 41,000 | 420/470 | absent | Good | 100 |
| Example 1-5 | 3012⁴⁾ | 0.01 | 41,000 | 320/470 | absent | Good | 100 |
| Example 1-6 | 3012⁴⁾ | 0.03 | 41,000 | 370/470 | absent | Good | 100 |
| Example 1-7 | 3012⁴⁾ | 0.2 | 42,000 | 410/470 | absent | Good | 100 |
| Example 1-8 | 3012⁴⁾ phenolic AO²⁾ | 0.03 0.01 | 40,000 | 430/470 | absent | Good | 100 |
| Comparative Example 1-1 | not added | - | 40,000 | 200/470 | absent | - | 100 |
| Comparative Example 1-2 | 2112³⁾ | 0.03 | 40,000 | 380/470 | absent | NG | 100 |

| | | | | | | | |
|---|---|---|---|---|---|---|---|
| *¹: Amount of antioxidant with respect to 100 parts by mass of each polymer (parts by mass) *²: Weight-average molecular weight after granulation (n = 4) (×10³)/Weight-average molecular weight after polymerization (×10³) ¹⁾ 3010: ADEKA STAB 3010 (trade name) manufactured by ADEKA Corporation; triisodecyl phosphite ²⁾ Phenolic AO: an aluminum phenoxide compound obtained by mixing stearyl-3-(3,5-di-*tert*-butyl-4-hydroxyphenyl)propionic acid amide with triethylaluminum ³⁾ 2112: ADEKA STAB 2112 (trade name) manufactured by ADEKA Corporation; tris(2,4-di-*tert*-butylphenyl)phosphite ⁴⁾ 3012: ADEKA STAB 3012 (trade name) manufactured by ADEKA Corporation; tristearyl phosphite | | | | | | | |

**[Table 2]**

| | Antioxidant (added amount) | Solvent (added amount) | Ratio (solvent/antioxidant) |
|---|---|---|---|
| Example 2-1 | 3010¹⁾ (20 mg) | heptane (600 mg) | 30 |
| Example 2-2 | 3010¹⁾ (60 mg) | heptane (2.0 g) | 33.3 |
| Example 2-3 | 3010¹⁾ (300 mg) | heptane (5.6 g) | 18.7 |
| Example 2-4 | 3012⁴⁾ (20 mg) | heptane (600 mg) | 30 |
| Example 2-5 | 3012⁴⁾ (60 mg) | heptane (2.0 g) | 33.3 |
| Example 2-6 | 3012⁴⁾ (300 mg) | heptane (5.6 g) | 18.7 |
| Comparative Example 2-2 | 3010¹⁾ (400 mg) | heptane (20 g) | 50 |
| Comparative Example 2-3 | 2112³⁾ (60 mg) | heptane (2.0 g) | 33.3 |
| Comparative Example 2-4 | 2112³⁾ (400 mg) | heptane (20 g) | 50 |
| Comparative Example 2-5 | 3012⁴⁾ (400 mg) | heptane (20 g) | 50 |

**[Table 3]**

| | Antioxidant | Amount of added antioxidant*¹ | Solvent | Amount of solvent *³ | Polymerization activity (g-PP/g-cat) | Stabilization effect *² | Foaming during extrusion | Working environment | Fluidity (%) |
|---|---|---|---|---|---|---|---|---|---|
| Example 2-1 | 3010¹⁾ | 0.01 | heptane | 0.3 | 40,000 | 300/470 | absent | Good | 100 |
| Example 2-2 | 3010¹⁾ | 0.03 | heptane | 1.0 | 37,000 | 350/470 | absent | Good | 100 |
| Example 2-3 | 3010¹⁾ | 0.15 | heptane | 2.8 | 36,000 | 360/470 | absent | Good | 100 |
| Example 2-4 | 3012⁴⁾ | 0.01 | heptane | 0.3 | 41,000 | 320/470 | absent | Good | 85 |
| Example 2-5 | 3012⁴⁾ | 0.03 | heptane | 1.0 | 38,000 | 360/470 | absent | Good | 100 |
| Example 2-6 | 3012⁴⁾ | 0.15 | heptane | 2.8 | 37,000 | 390/470 | absent | Good | 85 |
| Comparative Example 2-1 | not added | - | - | 0 | 40,000 | 200/470 | absent | - | 100 |
| Comparative Example 2-2 | 3010¹⁾ | 0.2 | heptane | 10 | 35,000 | 390/470 | present | Good | 10 |
| Comparative Example 2-3 | 2112³⁾ | 0.03 | heptane | 1.0 | 38,000 | 380/470 | absent | NG | 100 |
| Comparative Example 2-4 | 2112³⁾ | 0.2 | heptane | 10 | 35,000 | 400/470 | present | NG | 15 |
| Comparative Example 2-5 | 3012⁴⁾ | 0.2 | heptane | 10 | 36,000 | 400/470 | present | Good | 10 |

| | | | | | | | | | |
|---|---|---|---|---|---|---|---|---|---|
| *³: Amount of solvent (parts by mass) with respect to 100 parts by mass of each polymer | | | | | | | | | |

From Comparative Examples 2-2, 2-4 and 2-5, it was confirmed that foaming occurred during the extrusion of the obtained polymers when the solvent content was greater than 5 parts by mass with respect to 100 parts by mass of the respective polymers. Moreover, from Comparative Examples 1-2, 2-3 and 2-4, it was confirmed that the use of an antioxidant having a melting point of higher than 70°C resulted in dust generation during the feeding of the raw materials and the like, and the working environment was not favorable.

On the other hand, from Examples 1-1 to 1-8 and 2-1 to 2-6, it was confirmed that, according to the present invention, while imparting sufficient stabilization effect to a polymer of a monomer having an ethylenically unsaturated bond, not only the amount of the residual solvent in the resulting polymer can be reduced and the occurrence of foaming can be inhibited but also dust generation can be suppressed. Furthermore, from Examples 1-4 and 1-8, it was confirmed that the effects of the present invention were attained also when other antioxidant was used in combination of an antioxidant having a melting point of 70°C or lower.

## Claims

1. A method of producing a stabilized polymer, said method comprising the step of adding an antioxidant having a melting point of 70°C or lower to a catalyst system or a polymerization system before or during polymerization of a monomer having an ethylenically unsaturated bond wherein 0.005 to 0.5 parts by mass of said antioxidant is incorporated with respect to 100 parts by mass of a polymer obtainable by said polymerization of said monomer having an ethylenically unsaturated bond,
wherein said antioxidant having a melting point of 70°C or lower contains at least one compound represented by the following Formula (1) or (2): 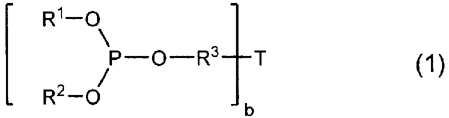
(wherein, R¹ and R² each independently represent any of an alkyl group having 1 to 40 carbon atoms, an aryl group having 6 to 40 carbon atoms, an arylalkyl group having 7 to 40 carbon atoms, a heterocycle-containing group having 3 to 25 carbon atoms and a combination thereof, which R¹ and R² are optionally bound together to form 5,5-dialkyl-1,3,2-dioxaphosphorinane;
R³ represents a direct bond, an alkylidene group having 1 to 40 carbon atoms or an arylene group having 6 to 40 carbon atoms;
b represents an integer of 1 to 4;
when b is 1, T represents a hydrogen atom, an alkyl group having 1 to 40 carbon atoms or an aryl group having 6 to 40 carbon atoms;
when b is 2, T represents an alkylidene group having 1 to 40 carbon atoms, an arylene group having 6 to 40 carbon atoms or -O-;
when b is 3, T represents an alkanetriyl group having 1 to 40 carbon atoms;
when b is 4, T represents an alkanetetrayl group having 1 to 40 carbon atoms;
a methylene group in said alkyl group, said alkylidene group, said alkanetriyl group and said alkanetetrayl group are optionally substituted with >C=O, -O-, -S-, -CO-O-, -O-CO-, -O-CO-O-, -NR⁴-, a phosphine, a phosphinite, a phosphonite, a phosphite, a phosphorane, a phosphonate or a combination thereof and also branched; and
R⁴ represents a hydrogen atom or an alkyl group having 1 to 4 carbon atoms); or 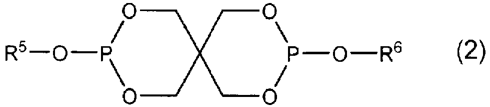 (wherein, R⁵ and R⁶ each independently represent an alkyl group having 1 to 40 carbon atoms or an aryl group having 6 to 40 carbon atoms).

2. A method of producing a stabilized polymer according to claim 1, wherein the antioxidant is in a mixture with a solvent wherein 5 parts by mass or less of said solvent are incorporated with respect to 100 parts by mass of the polymer obtainable by said polymerization of said monomer having an ethylenically unsaturated bond.

3. The method of producing a stabilized polymer according to claim 1 or 2, wherein said monomer having an ethylenically unsaturated bond comprises an *α*-olefin.

4. The method of producing a stabilized polymer according to claim 1 or 2, wherein the antioxidant is a phenolic or phosphorus-based antioxidant.

5. The method of producing a stabilized polymer according to claim 2, wherein said solvent is selected from mineral oils, aliphatic solvents, aromatic solvents and mixtures thereof.

6. The method of producing a stabilized polymer according to claim 2, wherein the amount of the solvent to be mixed with 100 g of the antioxidant is in a range of 1 to 4,000 g.

7. The method of producing a stabilized polymer according to claim 1 or 2, wherein a polymerization catalyst is added.

8. The method of producing a stabilized polymer according to claim 1 or 2, wherein a lubricant is added.

9. The method of producing a stabilized polymer according to claim 1 or 2, wherein an antistatic agent is added.

10. The method of producing a stabilized polymer according to claim 1 or 2, wherein said polymerization is vapor-phase polymerization or bulk polymerization.

11. A stabilized polymer obtainable by any one of methods according to claims 1 to 10.

12. A stabilized polymer wherein said polymer is obtainable by homopolymerization of ethylenically unsaturated monomers or from copolymerization of monomers including an ethylenically unsaturated monomer, and wherein said polymer comprises 0.005 to 0.5 parts by mass of an antioxidant with respect to 100 parts by mass of the polymer,
wherein said antioxidant has a melting point of 70°C or lower and contains at least one compound represented by the following Formula (1) or (2): 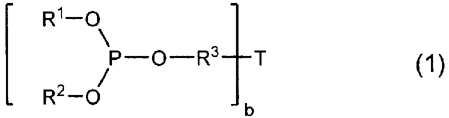
(wherein, R¹ and R² each independently represent any of an alkyl group having 1 to 40 carbon atoms, an aryl group having 6 to 40 carbon atoms, an arylalkyl group having 7 to 40 carbon atoms, a heterocycle-containing group having 3 to 25 carbon atoms and a combination thereof, which R¹ and R² are optionally bound together to form 5,5-dialkyl-1,3,2-dioxaphosphorinane;
R³ represents a direct bond, an alkylidene group having 1 to 40 carbon atoms or an arylene group having 6 to 40 carbon atoms;
b represents an integer of 1 to 4;
when b is 1, T represents a hydrogen atom, an alkyl group having 1 to 40 carbon atoms or an aryl group having 6 to 40 carbon atoms;
when b is 2, T represents an alkylidene group having 1 to 40 carbon atoms, an arylene group having 6 to 40 carbon atoms or -O-;
when b is 3, T represents an alkanetriyl group having 1 to 40 carbon atoms;
when b is 4, T represents an alkanetetrayl group having 1 to 40 carbon atoms;
a methylene group in said alkyl group, said alkylidene group, said alkanetriyl group and said alkanetetrayl group are optionally substituted with >C=O, -O-, -S-, -CO-O-, -O-CO-, -O-CO-O-, -NR⁴-, a phosphine, a phosphinite, a phosphonite, a phosphite, a phosphorane, a phosphonate or a combination thereof and also branched; and
R⁴ represents a hydrogen atom or an alkyl group having 1 to 4 carbon atoms); or 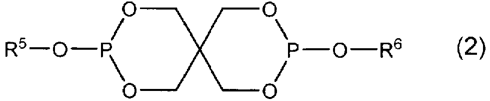 (wherein, R⁵ and R⁶ each independently represent an alkyl group having 1 to 40 carbon atoms or an aryl group having 6 to 40 carbon atoms).

13. A stabilized polymer according to claim 12, wherein said polymer further comprises 5 parts by mass or less of a solvent with respect to 100 parts by mass of the polymer.

14. A stabilized polymer according to claims 11 to 13, wherein the polymer is molded into a molded article by extrusion molding, injection molding, hollow molding or compression molding.

## Patentansprüche

1. Verfahren zum Herstellen eines stabilisierten Polymers, wobei das Verfahren den Schritt des Hinzufügens eines Antioxidans mit einem Schmelzpunkt von 70 °C oder niedriger zu einem Katalysatorsystem oder einem Polymerisationssystem vor oder während der Polymerisation eines Monomers mit einer ethylenisch ungesättigten Bindung umfasst, wobei 0,005 bis 0,5 Massenteile des Antioxidans in Bezug auf 100 Massenteile eines Polymers enthalten sind, das durch die Polymerisation des Monomers mit einer ethylenisch ungesättigten Bindung erhalten werden kann,
wobei das Antioxidans mit einem Schmelzpunkt von 70 °C oder niedriger wenigstens eine Verbindung enthält, die durch die folgende Formel (1) oder (2) dargestellt wird: 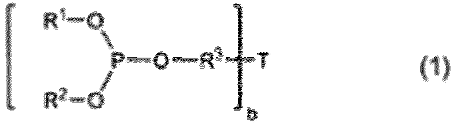
(wobei R¹ und R² jeweils unabhängig eine einer Alkylgruppe mit 1 bis 40 Kohlenstoffatomen, einer Arylgruppe mit 6 bis 40 Kohlenstoffatomen, einer Arylalkylgruppe mit 7 bis 40 Kohlenstoffatomen, einer einen Heterocyclus enthaltenden Gruppe mit 3 bis 25 Kohlenstoffatomen und einer Kombination davon darstellen, wobei R¹ und R² optional zusammen gebunden sind, um 5,5-Dialkyl-1,3,2-dioxaphosphorinan auszubilden;
R³ eine direkte Bindung, eine Alkylidengruppe mit 1 bis 40 Kohlenstoffatomen oder eine Arylengruppe mit 6 bis 40 Kohlenstoffatomen darstellt;
b eine ganze Zahl von 1 bis 4 darstellt;
wenn b 1 ist, T ein Wasserstoffatom, eine Alkylgruppe mit 1 bis 40 Kohlenstoffatomen oder eine Arylgruppe mit 6 bis 40 Kohlenstoffatomen darstellt;
wenn b 2 ist, T eine Alkylidengruppe mit 1 bis 40 Kohlenstoffatomen, eine Arylengruppe mit 6 bis 40 Kohlenstoffatomen oder -O- darstellt;
wenn b 3 ist, T eine Alkantriylgruppe mit 1 bis 40 Kohlenstoffatomen darstellt;
wenn b 4 ist, T eine Alkantetraylgruppe mit 1 bis 40 Kohlenstoffatomen darstellt;
eine Methylengruppe in der Alkylgruppe, der Alkylidengruppe, der Alkantriylgruppe und der Alkantetraylgruppe optional mit >C=O, -O-, -S-, -CO-O-, -O-CO-, -O-CO-O-, -NR⁴-, einem Phosphin, einem Phosphinit, einem Phosphonit, einem Phosphit, einem Phosphoran, einem Phosphonat oder einer Kombination davon substituiert und ebenso verzweigt sind; und
R⁴ ein Wasserstoffatom oder eine Alkylgruppe mit 1 bis 4 Kohlenstoffatomen darstellt); oder 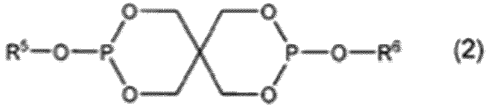 (wobei R⁵ und R⁶ jeweils unabhängig eine Alkylgruppe mit 1 bis 40 Kohlenstoffatomen oder eine Arylgruppe mit 6 bis 40 Kohlenstoffatomen darstellen).

2. Verfahren zum Herstellen eines stabilisierten Polymers nach Anspruch 1, wobei das Antioxidans in einem Gemisch mit einem Lösungsmittel ist, wobei 5 Massenteile oder weniger des Lösungsmittels in Bezug auf 100 Massenteile des Polymers enthalten sind, das durch die Polymerisation des Monomers mit einer ethylenisch ungesättigten Bindung erhalten werden kann.

3. Verfahren zum Herstellen eines stabilisierten Polymers nach Anspruch 1 oder 2, wobei das Monomer mit einer ethylenisch ungesättigten Bindung ein α-Olefin umfasst.

4. Verfahren zum Herstellen eines stabilisierten Polymers nach Anspruch 1 oder 2, wobei das Antioxidans ein phenolisches oder ein Antioxidans auf Phosphorbasis ist.

5. Verfahren zum Herstellen eines stabilisierten Polymers nach Anspruch 2, wobei das Lösungsmittel aus Mineralölen, aliphatischen Lösungsmitteln, aromatischen Lösungsmitteln und Gemischen davon ausgewählt ist.

6. Verfahren zum Herstellen eines stabilisierten Polymers nach Anspruch 2, wobei die Menge des Lösungsmittel, das mit 100 g des Antioxidans gemischt werden soll, in einem Bereich von 1 bis 4.000 g liegt.

7. Verfahren zum Herstellen eines stabilisierten Polymers nach Anspruch 1 oder 2, wobei ein Polymerisationskatalysator hinzugefügt wird.

8. Verfahren zum Herstellen eines stabilisierten Polymers nach Anspruch 1 oder 2, wobei ein Schmiermittel hinzugefügt wird.

9. Verfahren zum Herstellen eines stabilisierten Polymers nach Anspruch 1 oder 2, wobei ein Antistatikzusatz hinzugefügt wird.

10. Verfahren zum Herstellen eines stabilisierten Polymers nach Anspruch 1 oder 2, wobei die Polymerisation eine Dampfphasenpolymerisation oder eine Substanzpolymerisation ist.

11. Stabilisiertes Polymer, das durch eines der Verfahren nach Ansprüchen 1 bis 10 erhalten werden kann.

12. Stabilisiertes Polymer, wobei das Polymer durch eine Homopolymerisation von ethylenisch ungesättigten Monomeren oder durch eine Co-Polymerisation von Monomeren einschließlich eines ethylenisch ungesättigten Monomers erhalten werden kann, und wobei das Polymer 0,005 bis 0,5 Massenteile eines Antioxidans in Bezug auf 100 Massenteile des Polymers umfasst,
wobei das Antioxidans einen Schmelzpunkt von 70 °C oder niedriger aufweist und wenigstens eine Verbindung enthält, die durch die folgende Formel (1) oder (2) dargestellt wird: 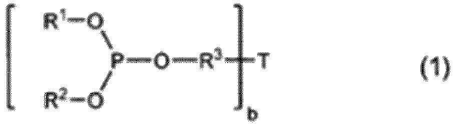
(wobei R¹ und R² jeweils unabhängig eine einer Alkylgruppe mit 1 bis 40 Kohlenstoffatomen, einer Arylgruppe mit 6 bis 40 Kohlenstoffatomen, einer Arylalkylgruppe mit 7 bis 40 Kohlenstoffatomen, einer einen Heterocyclus enthaltenden Gruppe mit 3 bis 25 Kohlenstoffatomen und einer Kombination davon darstellen, wobei R¹ und R² optional zusammen gebunden sind, um 5,5-Dialkyl-1,3,2-dioxaphosphorinan auszubilden;
R³ eine direkte Bindung, eine Alkylidengruppe mit 1 bis 40 Kohlenstoffatomen oder eine Arylengruppe mit 6 bis 40 Kohlenstoffatomen darstellt;
b eine ganze Zahl von 1 bis 4 darstellt;
wenn b 1 ist, T ein Wasserstoffatom, eine Alkylgruppe mit 1 bis 40 Kohlenstoffatomen oder eine Arylgruppe mit 6 bis 40 Kohlenstoffatomen darstellt;
wenn b 2 ist, T eine Alkylidengruppe mit 1 bis 40 Kohlenstoffatomen, eine Arylengruppe mit 6 bis 40 Kohlenstoffatomen oder -O- darstellt;
wenn b 3 ist, T eine Alkantriylgruppe mit 1 bis 40 Kohlenstoffatomen darstellt;
wenn b 4 ist, T eine Alkantetraylgruppe mit 1 bis 40 Kohlenstoffatomen darstellt;
eine Methylengruppe in der Alkylgruppe, der Alkylidengruppe, der Alkantriylgruppe und der Alkantetraylgruppe optional mit >C=O, -O-, -S-, -CO-O-, -O-CO-, -O-CO-O-, -NR⁴-, einem Phosphin, einem Phosphinit, einem Phosphonit, einem Phosphit, einem Phosphoran, einem Phosphonat oder einer Kombination davon substituiert und ebenso verzweigt sind; und
R⁴ ein Wasserstoffatom oder eine Alkylgruppe mit 1 bis 4 Kohlenstoffatomen darstellt); oder 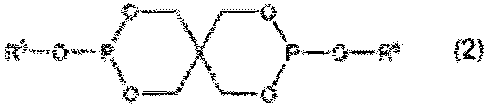 (wobei R⁵ und R⁶ jeweils unabhängig eine Alkylgruppe mit 1 bis 40 Kohlenstoffatomen oder eine Arylgruppe mit 6 bis 40 Kohlenstoffatomen darstellen).

13. Stabilisiertes Polymer nach Anspruch 12, wobei das Polymer ferner 5 Massenteile oder weniger eines Lösungsmittels in Bezug auf 100 Massenteile des Polymers umfasst.

14. Stabilisiertes Polymer nach Anspruch 11 bis 13, wobei das Polymer durch Strangpressen, Spritzgießen, Hohlformen oder Formpressen zu einem Formteil geformt wird.

## Revendications

1. Procédé de production d'un polymère stabilisé, ledit procédé comprenant l'étape consistant à ajouter un antioxydant ayant un point de fusion de 70 °C ou inférieur à un système de catalyse ou à un système de polymérisation avant ou pendant la polymérisation d'un monomère ayant une liaison éthyléniquement insaturée, dans lequel 0,005 à 0,5 parties en masse dudit antioxydant est incorporée par rapport à 100 parties en masse d'un polymère pouvant être obtenu par ladite polymérisation dudit monomère ayant une liaison éthyléniquement insaturée,
dans lequel ledit antioxydant ayant un point de fusion de 70°C ou inférieur contient au moins un composé représenté par la formule (1) ou la formule (2) suivante : 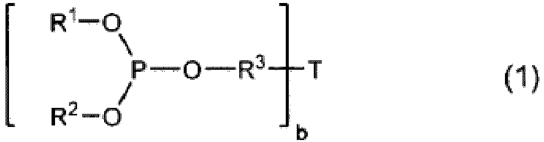
(dans laquelle formule, R¹ et R² représentent chacun indépendamment l'un quelconque d'un groupe alkyle portant 1 à 40 atomes de carbone, d'un groupe aryle portant 6 à 40 atomes de carbone, d'un groupe arylalkyle portant 7 à 40 atomes de carbone, d'un groupe contenant un hétérocycle portant 3 à 25 atomes de carbone et d'une combinaison de ceux-ci, lesquels R¹ et R² sont éventuellement liés ensemble pour former le 5,5 -dialkyl-1,3,2-dioxaphosphorinane,
R³ représente une liaison directe, un groupe alkylidène portant 1 à 40 atomes de carbone ou un groupe arylène portant 6 à 40 atomes de carbone ;
b représente un nombre entier valant de 1 à 4 ;
lorsque b est égal à 1, T représente un atome d'hydrogène, un groupe alkyle portant 1 à 40 atomes de carbone ou un groupe aryle portant 6 à 40 atomes de carbone ;
lorsque b vaut 2, T représente un groupe alkylidène portant 1 à 40 atomes de carbone, un groupe arylène portant 6 à 40 atomes de carbone ou -0- ;
lorsque b vaut 3, T représente un groupe alcanetriyle portant 1 à 40 atomes de carbone ;
lorsque b vaut 4, T représente un groupe alcanetétrayle portant 1 à 40 atomes de carbone ;
un groupe méthylène dans ledit groupe alkyle, ledit groupe alkylidène, ledit groupe alcanetriyle et ledit groupe alcanetétrayle sont éventuellement substitués par > C = O, -O-, -S-, -CO-O, -O-CO-, -O-CO-O-, -NR⁴-, une phosphine, un phosphinite, un phosphonite, un phosphite, un phosphorane, un phosphonate ou une combinaison de ceux-ci et ils sont également ramifiés ; et
R⁴ représente un atome d'hydrogène ou un groupe alkyle portant 1 à 4 atomes de carbone ; ou 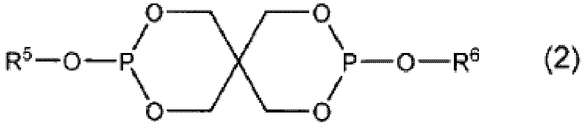 (dans laquelle formule, R⁵ et R⁶ représentent chacun indépendamment un groupe alkyle portant 1 à 40 atomes de carbone ou un groupe aryle portant 6 à 40 atomes de carbone).

2. Procédé de production d'un polymère stabilisé selon la revendication 1, dans lequel l'antioxydant se trouve dans un mélange avec un solvant dans lequel 5 parties en masse ou moins dudit solvant sont incorporées par rapport à 100 parties en masse du polymère pouvant être obtenu par ladite polymérisation dudit monomère ayant une liaison éthyléniquement insaturée.

3. Procédé de production d'un polymère stabilisé selon la revendication 1 ou la revendication 2, dans lequel ledit monomère ayant une liaison éthyléniquement insaturée comprend une α-oléfine.

4. Procédé de production d'un polymère stabilisé selon la revendication 1 ou la revendication 2, dans lequel l'antioxydant est un antioxydant phénolique ou à base de phosphore.

5. Procédé de production d'un polymère stabilisé selon la revendication 2, dans lequel ledit solvant est sélectionné parmi les huiles minérales, les solvants aliphatiques, les solvants aromatiques et leurs mélanges.

6. Procédé de production d'un polymère stabilisé selon la revendication 2, dans lequel la quantité du solvant à mélanger avec 100 g de l'antioxydant se situe dans une plage de 1 à 4 000 g.

7. Procédé de production d'un polymère stabilisé selon la revendication 1 ou la revendication 2, dans lequel est ajouté un catalyseur de polymérisation.

8. Procédé de production d'un polymère stabilisé selon la revendication 1 ou la revendication 2, dans lequel est ajouté un lubrifiant.

9. Procédé de production d'un polymère stabilisé selon la revendication 1 ou la revendication 2, dans lequel est ajouté un agent antistatique.

10. Procédé de production d'un polymère stabilisé selon la revendication 1 ou la revendication 2, dans lequel ladite polymérisation est une polymérisation en phase vapeur ou une polymérisation en masse.

11. Polymère stabilisé pouvant être obtenu par l'un quelconque des procédés selon les revendications 1 à 10.

12. Polymère stabilisé, dans lequel ledit polymère peut être obtenu par homopolymérisation de monomères éthyléniquement insaturés ou par copolymérisation de monomères contenant un monomère éthyléniquement insaturé, et dans lequel ledit polymère comprend 0,005 à 0,5 parties en masse d'un antioxydant par rapport à 100 parties en masse du polymère,
dans lequel ledit antioxydant a un point de fusion de 70 °C ou inférieur et contient au moins un composé représenté par la formule (1) ou la formule (2) suivante : 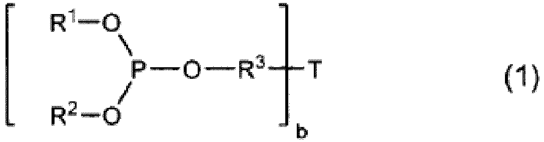
(dans laquelle formule, R¹ et R² représentent chacun indépendamment l'un quelconque d'un groupe alkyle portant 1 à 40 atomes de carbone, d'un groupe aryle ayant 6 à 40 atomes de carbone, d'un groupe arylalkyle portant 7 à 40 atomes de carbone, d'un groupe contenant un hétérocycle portant 3 à 25 atomes de carbone et d'une combinaison de ceux-ci, lesquels R¹ et R² sont éventuellement liés ensemble pour former le 5,5-dialkyl-1,3,2-dioxaphosphorinane ;
R³ représente une liaison directe, un groupe alkylidène portant 1 à 40 atomes de carbone ou un groupe arylène portant 6 à 40 atomes de carbone ;
b représente un nombre entier valant de 1 à 4 ;
lorsque b vaut 1, T représente un atome d'hydrogène, un groupe alkyle portant 1 à 40 atomes de carbone ou un groupe aryle portant 6 à 40 atomes de carbone ;
lorsque b vaut 2, T représente un groupe alkylidène portant 1 à 40 atomes de carbone, un groupe arylène portant 6 à 40 atomes de carbone ou -0- ;
lorsque b vaut 3, T représente un groupe alkanetriyle portant 1 à 40 atomes de carbone ;
lorsque b vaut 4, T représente un groupe alkanetrayle portant 1 à 40 atomes de carbone ;
un groupe méthylène dans ledit groupe alkyle, ledit groupe alkylidène, ledit groupe alkanetriyle et ledit groupe alkanetrayle sont optionnellement substitués par > C = O, -O-, -S-, -CO-O, -O-CO-, -O-CO-O-, -NR⁴-, une phosphine, un phosphinite, un phosphonite, un phosphite, un phosphorane, un phosphonate ou une combinaison de ceux-ci et ils sont également ramifiés ; et
R⁴ représente un atome d'hydrogène ou un groupe alkyle portant 1 à 4 atomes de carbone ; ou 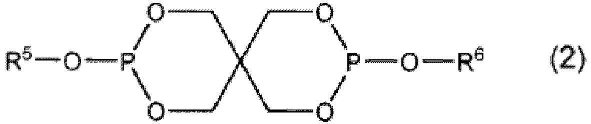 (dans laquelle formule, R⁵ et R⁶ représentent chacun indépendamment un groupe alkyle portant 1 à 40 atomes de carbone ou un groupe aryle portant 6 à 40 atomes de carbone).

13. Polymère stabilisé selon la revendication 12, dans lequel ledit polymère comprend en outre 5 parties en masse ou moins d'un solvant par rapport à 100 parties en masse du polymère.

14. Polymère stabilisé selon les revendications 11 à 13, dans lequel le polymère est moulé en un article moulé par moulage par extrusion, moulage par injection, moulage en creux ou moulage par compression.
